# EUROPÄISCHE PATENTANMELDUNG

(11) **EP 4 825 498 A1**
(43) Veröffentlichungstag der Anmeldung: **21.10.2026**
(21) Anmeldenummer: 26162009.0
(22) Anmeldetag: 03.03.2026
(51) Int. Cl.: B05C 1/02, B60D 1/02, B60D 1/36, B60D 1/58, B60D 1/00

(54) **KUPPLUNGSELEMENT FÜR EINEN FAHRBAREN BEHÄLTER**

(30) Priorität: 04.04.2025 DE 102025113245
(71) Anmelder: Deutsche Post AG, 53113 Bonn (DE)
(72) Erfinder: Genieser, Christoph, 45886 Gelsenkirchen (DE)
(74) Vertreter: dompatent

(57) **Zusammenfassung**

Kupplungselement für einen fahrbaren Behälter zur Verbindung mit einer Deichsel mit einem Kupplungsmaul, wobei das Kupplungsmaul eine offene Vorderseite aufweist und eine der Vorderseite gegenüberliegende geschlossene Rückseite, einem in dem Kupplungsmaul angeordneten Dorn zur Aufnahme in einer Deichselöffnung der Deichsel, wobei der Dorn ein erstes Ende und ein gegenüberliegendes zweites Ende aufweist, wobei das erste Ende des Dorns mit einer Oberseite des Kupplungsmauls verbunden ist und sich ausgehend von der Oberseite erstreckt in Richtung einer der Oberseite gegenüberliegenden Unterseite des Kupplungsmauls, wobei zwischen dem zweiten Ende des Dorns und der Unterseite des Kupplungsmauls ein Spalt ausgebildet ist, so dass die Deichsel durch den Spalt in das Kupplungselement eingeschoben werden kann, wobei ein Federblech angeordnet ist zwischen der Unterseite des Kupplungsmauls und dem zweiten Ende des Dorns.

## Beschreibung

Die vorliegende Erfindung betrifft ein Kupplungselement für einen fahrbaren Behälter insbesondere zur Verbindung mit einer Deichsel eines weiteren fahrbaren Behälters. Weiterhin betrifft die vorliegende Erfindung eine Kupplung mit einem solchen Kupplungselement sowie einen fahrbaren Behälter.

Bekannte fahrbare Behälter zum Transport von Stückgütern, wie zum Beispiel Postsendungen und dergleichen, weisen an einer Seite eine Deichsel auf und an der gegenüberliegenden Seite ein Kupplungselement. Hierbei kann die Deichsel des fahrbaren Behälters in ein Kupplungselement eines vorhergehenden fahrbaren Behälters eingeführt und mit diesem verbunden werden. Ebenso kann ein nachfolgender fahrbarer Behälter mit seiner Deichsel mit dem Kupplungselement des fahrbaren Behälters verbunden werden, sodass auf einfache und flexibel Weise fahrbare Behälter miteinander verbunden werden können. Hierbei kann beispielsweise die Anzahl der miteinander verbundenen fahrbaren Behälter an die Menge der zu transportierenden Stückgüter bzw. Postsendungen angepasst werden.

Dabei ist es erforderlich, dass die fahrbaren Behälter einerseits sicher miteinander verbunden sind, sodass ein unbeabsichtigtes Trennen der fahrbaren Behälter während der Bewegung verhindert wird. Gleichzeitig ist es erforderlich die einzelnen fahrbaren Behälter schnell voneinander zu trennen bzw. miteinander verbinden zu können, sodass eine flexible und schnelle Kombinierbarkeit unterschiedlicher fahrbarer Behälter ermöglicht wird.

Bei bekannten fahrbaren Behältern weist das Kupplungselement einen federgesicherten Bolzen auf, der in eine Deichselöffnung der Deichsel eingeschoben wird. Der Bolzen wird durch eine Wippe im Kupplungsmaul mit Hilfe seiner Federkraft ausgelöst. Hierzu wird der Bolzen entgegen der Federkraft, beispielsweise durch einen von zwei Fußhebel und deren Übertragung über zwei Gestänge pro Fußhebel, in eine Offenstellung bewegt und über die Wippe in der Offenstellung gehalten, sodass ein Kupplungsmaul des Kupplungselements freigegeben wird. Nachfolgend wird die Deichsel in das Maul eingeführt. Durch die Wippe wird der Bolzen ausgelöst und der Bolzen bewegt sich aufgrund der Federsicherung wieder in eine geschlossene Stellung zurück, wenn die Deichsel gegen die Wippe im Kupplungsmaul stößt. Somit können die fahrbaren Behälter auf einfache Weise schnell miteinander verbunden bzw. wieder voneinander getrennt werden.

Jedoch erfordern die bekannten Kupplungselemente eine Vielzahl von mechanischen Teilen, wie beispielsweise den Fußhebel, die Feder und dergleichen, welche dem Verschleiß unterliegen und somit fehleranfällig sind. Insbesondere besteht die Gefahr, dass die Feder bricht, die Bewegbarkeit der Fußhebel verlorengeht oder auch die Wippe nicht mehr auslöst und somit keine sichere Verbindung der einzelnen fahrbaren Behälter gewährleistet ist.

Aufgabe der vorliegenden Erfindung ist es, ein Kupplungselement bereitzustellen, welches verschleißsicher ist und eine einfache Handhabung gewährleistet.

Die Aufgabe wird gelöst durch ein Kupplungselement gemäß Anspruch 1, durch eine Kupplung gemäß Anspruch 14 und einen fahrbaren Behälter gemäß Anspruch 15.

In einem Aspekt der vorliegenden Erfindung wird ein Kupplungselement für einen fahrbaren Behälter bzw. Rollbehälter zur Verbindung mit einer Deichsel bereitgestellt. Das Kupplungselement weist hierbei ein Kupplungsmaul auf mit einer offenen Vorderseite und einer der Vorderseite gegenüberliegenden geschlossenen Rückseite. Hierbei wird die Deichsel eines weiteren fahrbaren Behälters durch die offene Vorderseite in das Kupplungsmaul eingeführt.

Insbesondere weist das Kupplungsmaul eine Trichterform auf, wobei sich der Querschnitt von der offenen Vorderseite zur geschlossenen Rückseite reduziert. Hierdurch wird eine Deichsel des weiteren fahrbaren Behälters entlang der Rückseite in die Mitte des Kupplungsmauls bewegt. In dem Kupplungsmaul ist ein Dorn angeordnet zur Aufnahme in einer Deichselöffnung der Deichsel, wobei der Dorn ein erstes Ende und ein gegenüberliegendes zweites Ende aufweist. Insbesondere ist der Dorn mittig im Kupplungsmaul angeordnet. Dabei ist das erste Ende des Dorns mit einer Oberseite des Kupplungsmauls verbunden und erstreckt sich ausgehend von der Oberseite in Richtung einer der Oberseite gegenüberliegenden Unterseite des Kupplungsmauls. Die Oberseite und Unterseite entsprechen jeweils der Orientierung des Kupplungsmauls und insbesondere der Erstreckung des Dorns innerhalb des Kupplungsmauls im eingebauten Zustand. Hierbei erstreckt sich der Dorn insbesondere in vertikaler Richtung, wobei in vertikaler Richtung die Oberseite des Kupplungsmauls über der Unterseite angeordnet ist. In anderen Worten erstreckt sich der Dorn im eingebauten Zustand in Richtung der Schwerkraft von oben nach unten. Hierbei ist zwischen dem zweiten Ende des Dorns und der Unterseite des Kupplungsmauls ein ausreichender Spalt ausgebildet, sodass die Deichsel durch den Spalt in das Kupplungselement eingeschoben werden kann. Die Deichsel wird somit bei Verbinden der Deichsel mit dem Kupplungselement so weit in das Kupplungsmaul eingeschoben, bis der Dorn des Kupplungselements fluchtend mit der Deichselöffnung der Deichsel ausgerichtet ist, sodass die Deichsel nach oben bewegt werden kann, um den Dorn in die Deichselöffnung aufzunehmen. Insbesondere weist die Deichsel eine Deichselfeder auf, so dass die Deichsel aufgrund der Deichselfeder nach oben bewegt wird.

Erfindungsgemäß ist ein Federblech angeordnet zwischen der Unterseite des Kupplungsmauls und dem zweiten Ende des Dorns. Durch das Federblech wird insbesondere der Spalt zwischen dem zweiten Ende des Dorns und der Unterseite des Kupplungselements verschlossen. Ein unbeabsichtigtes Herausrutschen der Deichsel vom Dorn des Kupplungselements, insbesondere bei einem Bruch der Deichselfeder, wird durch das Federblech gerade verhindert. Somit weist das vorliegende Kupplungselement keine mechanisch komplexen Teile auf. Einzig bewegbares Teil ist das Federblech, welches nur einem geringen oder keinem Verschleiß unterliegt. Das Federblech sorgt für die maximal Absicherung der Kupplung in allen möglichen Betriebszuständen. Auch ein Bruch der Deichselfeder führt nicht unmittelbar zu einer Unbrauchbarkeit des fahrbaren Behälters, da durch das Kupplungselement der vorliegenden Erfindung auch bei einem solchen Deichselbruch eine sichere Verbindung durch des Vorsehens des Federblechs gewährleistet ist. Somit ist ein robustes und langlebiges Kupplungselement geschaffen, welches auf einfache und schnelle Weise ein Verbinden unterschiedlicher fahrbarer Behälter miteinander erlaubt.

Vorzugsweise ist das Federblech in Richtung des zweiten Endes des Dorns vorgespannt. Somit wird durch das Federblech der Spalt zwischen dem zweiten Ende des Dorns und der Unterseite des Kupplungsmauls blockiert, wobei das Federblech, beispielsweise durch die Deichsel selbst, durch eine Handkraft oder Fußkraft insbesondere bei Überwindung der Federkraft der Deichselfeder, entgegen seiner Federspannung bewegt werden kann, sodass die Deichsel in das Kupplungsmauls des Kupplungselements eingeführt werden kann.

Vorzugsweise ist das Federblech von einer ersten Position in eine zweite Position bewegbar entgegen der Federkraft, wobei in der ersten Position das Federblech am zweiten Ende des Dorns anliegt und somit den Spalt zwischen dem zweiten Ende des Dorns und der Unterseite des Kupplungsmauls blockiert und in der zweiten Position das Federblech den Spalt freigibt, sodass die Deichsel in das Kupplungsmaul des Kupplungselements eingeführt werden kann und die Deichselöffnung auf den Dorn aufgeschoben werden kann. Somit wird durch das Federblech ein unbeabsichtigtes Trennen der Deichsel vom Kupplungselement gerade verhindert. Auch wenn die Deichsel, beispielsweise durch einen Bruch der Deichselfeder, aufgrund der Schwerkraft nach unten fällt, ist eine Herausrutschen vom Dorn des Kupplungselements durch das Federblech verhindert.

Vielmehr liegt die Deichsel auf dem Federblech auf, wobei weiterhin der Dorn in der Kupplungsöffnung angeordnet bleibt zur Übertragung von Zug- und Bremskräften von einem fahrbaren Behälter auf den nachfolgenden fahrbaren Behälter.

Vorzugsweise weist das Federblech eine Federkraft auf, die größer ist als die wirkende Gewichtskraft der Deichsel, sodass das Federblech nicht in die zweite Position bewegt wird, wenn die Deichsel lediglich auf dem Federblech aufliegt. Erst wenn die Deichsel aktiv von einem Nutzer nach unten gedrückt wird, wird das Federblech in die zweite Position bewegt und gibt den Spalt zwischen dem zweiten Ende des Dorns und der Unterseite des Kupplungsmauls frei, sodass die Deichsel von dem Kupplungselement getrennt werden kann. Hierbei bezeichnet insbesondere die wirkende Gewichtskraft entweder die Gewichtskraft der Deichsel bzw. deren Gesamtgewicht oder die Gewichtskraft, welche an dem mit dem Kupplungselement zu verbindenden Ende der Deichsel wirkt aufgrund der drehbaren Lagerung der Deichsel an dem nachfolgenden fahrbaren Behälter. Die wirkende Gewichtskraft der Deichsel kann dabei kleiner sein als das Gesamtgewicht der Deichsel aufgrund des zweiten Verbindungspunkts der Deichsel an dem nachfolgenden fahrbaren Behälter.

Vorzugsweise ist das Federblech mit einer Vorderkante der Unterseite verbunden und insbesondere verschweißt. Hierdurch ist eine einfache Verbindung zwischen dem Federblech und dem Kupplungsmaul gewährleistet. Insbesondere sind keine weiteren beweglichen Teile erforderlich.

Vorzugsweise besteht das Federblech aus Federstahl.

Vorzugsweise weist das Federblech eine Dicke auf, die kleiner ist als die Breite oder Länge des Federblechs.

Vorzugsweise beträgt die Dicke des Federblechs zwischen 0,3mm und 3mm, bevorzugt zwischen 0,6mm und 1,5mm. Hierbei ist die Dicke abgestimmt auf die erforderliche Federkraft, welche durch das Federblech bereitgestellt wird zur Sicherung der Deichsel in dem Kupplungselement.

Vorzugsweise erstreckt sich der Dorn in Richtung der Rückseite. Insbesondere ist hierbei das erste Ende des Dorns weiter in Richtung der Vorderseite des Kupplungsmauls angeordnet als das zweite Ende. Bevorzugt ist hierbei das erste Ende des Dorns unmittelbar an der Vorderseite des Kupplungsmauls angeordnet und der Dorn erstreckt sich ausgehend von der Oberseite des Kupplungsmauls sowohl in Richtung der Unterseite des Kupplungsmauls als auch in Richtung der Rückseite des Kupplungsmauls. Somit ist der Teil des Dorns, welcher am weitesten in Richtung der Vorderseite des Kupplungsmauls weist, am ersten Ende angeordnet. Ist eine Deichsel mit dem Kupplungselement verbunden und der Dorn in einer Deichselöffnung angeordnet, so wird bei Anliegen einer Zugkraft, welche von dem Dorn auf die Deichsel übertragen wird, die Deichselöffnung in Richtung des ersten Endes des Dorns bewegt, also weg von dem zweiten Ende und insbesondere dem Spalt zwischen dem zweiten Ende des Dorns und der Unterseite des Kupplungsmauls. Insbesondere wird somit die nach oben wirkende Federkraft einer Deichselfeder unterstützt durch die geneigte Anordnung des Dorns. Somit wird ein unbeabsichtigtes Trennen der fahrbaren Behälter aufgrund einer angelegten Zugkraft, insbesondere bei fehlender oder gebrochener Deichselfeder, gerade vermieden.

Vorzugsweise weist der Dorn zu einer Horizontalen einen Winkel von weniger als 90° auf und insbesondere einen Winkel zwischen 60° und 80° auf.

Vorzugsweise weist der Dorn zumindest abschnittsweise einen Querschnitt auf, der der Deichselöffnung entspricht. Hierdurch wird eine formschlüssige Verbindung zwischen dem Dorn und der Deichselöffnung gewährleistet, sodass kein Spiel oder nur ein geringes Spiel zwischen der Deichselöffnung und dem Dorn vorliegt. Kraftspitzen bei Anliegen einer Zugkraft oder Bremskraft, welche zu einer Beschädigung entweder des Kupplungselements oder der Deichsel führen würden, werden somit vermieden bzw. reduziert.

Vorzugsweise weist der Dorn an seinem ersten Ende eine Auflagefläche auf, wobei die Auflagefläche in Richtung der Oberseite weist und in Richtung der Vorderseite angeordnet ist. Wird beispielsweise eine Bremskraft von dem Kupplungselement auf die Deichsel eines nachfolgenden fahrbaren Behälters übertragen, schiebt sich das mit dem Dorn verbundene Ende der Deichsel des nachfolgenden fahrbaren Behälters auf die Auflagefläche und liegt dort auf. Ein Herunterfallen der Deichsel in Richtung des zweiten Endes des Dorns bzw. des Federblechs wird hierdurch gerade vermieden. Die Deichsel verbleibt auf der Auflagefläche des Dorns, bis erneut eine Zugkraft von dem Kupplungselement und insbesondere dem Dorn auf die Deichsel des nachfolgenden fahrbaren Behälters übertragen werden soll. Hierdurch wird sichergestellt, dass die Deichsel auch bei Übertragung einer Bremskraft an dem ersten Ende des Dorns angeordnet bleibt und somit gerade ein ungewolltes Trennen der Deichsel des nachfolgenden fahrbaren Behälters von dem Kupplungselement verhindert wird.

Vorzugsweise weist der Dorn an seinem zweiten Ende eine in Richtung der Vorderseite weisende Abschrägung auf. Durch die Abschrägung wird die Deichsel des nachfolgenden fahrbaren Behälters auf einfache Weise in den Spalt zwischen dem zweiten Ende des Dorns und der Unterseite des Kupplungsmauls geleitet, sodass ein einfaches Verbinden zwischen der Kupplung und dem Kupplungselement gewährleistet ist.

Vorzugsweise entspricht eine Breite des Spalts im Wesentlichen der Dicke der Deichsel. Die Breite des Spalts ergibt sich dabei als Abstand zwischen dem zweiten Ende des Dorns und der Unterseite des Kupplungsmauls bzw. als Abstand zwischen dem zweiten Ende des Dorns und dem Federblech in seiner zweiten Position. Hierdurch wird sichergestellt, dass die Deichsel auf einfache Weise durch den Spalt in das Kupplungselement eingeschoben werden kann und die Deichselöffnung der Deichsel mit dem Dorn des Kupplungselement verbunden werden kann.

In einem weiteren Aspekt der vorliegenden Erfindung wird eine Kupplung bereitgestellt mit einem Kupplungselement wie vorstehend beschrieben. Weiterhin weist die Kupplung eine Deichsel auf, wobei die Deichsel eine Deichselöffnung aufweist und der Dorn des Kupplungselements in der Deichselöffnung aufnehmbar ist zum Verbinden der Deichsel mit dem Kupplungselement.

Vorzugsweise weist die Deichsel eine Deichselfeder auf, wobei die Deichselfeder die Deichsel nach oben vorspannt. Wird somit keine Kraft auf die Deichsel aufgebracht und ist die Deichsel nicht mit dem Kupplungselement verbunden, bewegt sich die Deichsel aufgrund der Federkraft der Deichselfeder nach oben.

In einem weiteren Aspekt der vorliegenden Erfindung wird ein fahrbarer Behälter bereitgestellt mit einer Deichsel an einer ersten Seite und einem Kupplungselement wie vorstehend beschrieben an einer gegenüberliegenden zweiten Seite, sodass der fahrbare Behälter mit der Deichsel mit einem vorgehenden fahrbaren Behälter verbunden werden kann und/oder die Deichsel eines nachfolgenden fahrbaren Behälters mit dem Kupplungselement verbindbar ist. Hierbei können der vorhergehende fahrbare Behälter als auch der nachfolgende fahrbare Behälter gleich oder identisch ausgebildet sein zur Verbindung mit der Deichsel bzw. dem Kupplungselement.

Vorzugsweise weist der fahrbare Behälter drei oder mehr Rollen oder Räder auf, durch die der fahrbare Behälter bewegbar ist und insbesondere gefahren werden kann.

Vorzugsweise weist die Deichsel eine Deichselfeder auf, wobei die Deichselfeder die Deichsel nach oben vorspannt. Wird somit keine Kraft auf die Deichsel aufgebracht und ist die Deichsel nicht mit dem Kupplungselement verbunden, bewegt sich die Deichsel aufgrund der Federkraft der Deichselfeder nach oben.

Somit wird ein Kupplungselement insbesondere für einen fahrbaren Behälter bereitgestellt, welches auf einfache Weise mit einer Deichsel eines weiteren fahrbaren Behälters verbunden werden kann und ein unbeabsichtigtes Trennen verhindert, wobei das Kupplungselement keine komplexe Mechanik aufweist, sodass Beschädigungen unwahrscheinlicher sind, welche zu einem Ausfall des Kupplungselements führen würden.

Nachfolgend wir die Erfindung anhand bevorzugter Ausführungsformen unter Bezugnahme auf die beigefügten Figuren näher erläutert.

Die Figuren zeigen:

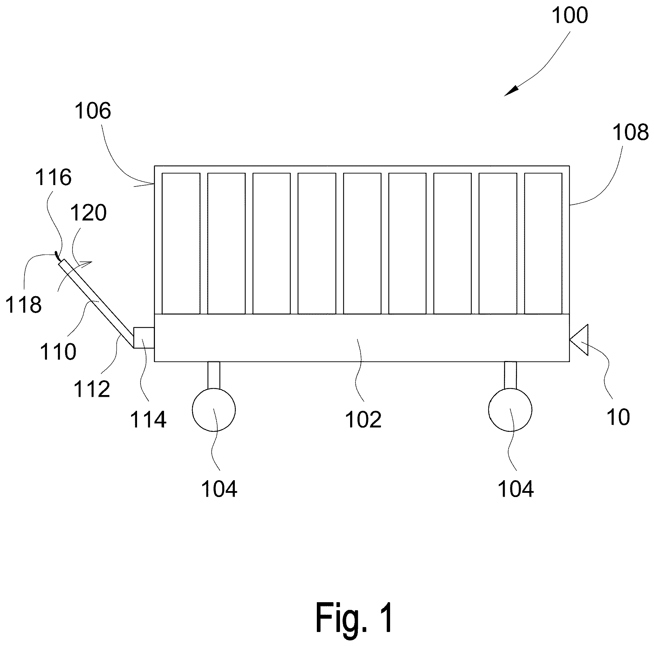

Fig. 1 ein fahrbarer Behälter gemäß der vorliegenden Erfindung,
Fig. 2 eine Detailansicht des Kupplungselements gemäß der vorliegenden Erfindung und
Fig. 3 eine Schnittansicht des Kupplungselement gemäß der Fig. 2.

Der erfindungsgemäße fahrbare Behälter 100 bzw. Rollbehälter weist einen Ladebereich 102 auf, welcher auf vier Rollen oder Rädern 104 bewegt werden kann. Hierbei weist der fahrbare Behälter 100 eine Vorderseite 106 und eine Rückseite 108 auf. An der Vorderseite 106 des fahrbaren Behälters 100 ist eine Deichsel 110 angeordnet, welche mit einem ersten Ende 112 über eine Drehverbindung 114 mit der Vorderseite 106 des fahrbaren Behälters 100 verbunden ist. Weiterhin weist die Deichsel 110 ein zweites Ende 116 auf, wobei an dem zweiten Ende 116 eine Deichselöffnung 118 ausgebildet ist, durch die die Deichsel 110 mit einem vorhergehenden fahrbaren Behälter verbunden werden kann.

Weiterhin weist der fahrbare Behälter 100 ein Kupplungselement 10 auf, welches an der Rückseite 108 des fahrbaren Behälters 100 angeordnet ist. Über das Kupplungselement 10 kann ein nachfolgender fahrbarer Behälter mittels der Deichsel des nachfolgenden fahrbaren Behälters verbunden werden, sodass ein Zug aus einer Vielzahl von fahrbaren Behältern 100 gebildet werden kann.

Vorzugsweise ist die Deichsel 110 federgelagert, sodass, sofern die Deichsel 110 kräftefrei ist, die Deichsel 110 entsprechend des Pfeils 120 nach oben verschwenkt wird.

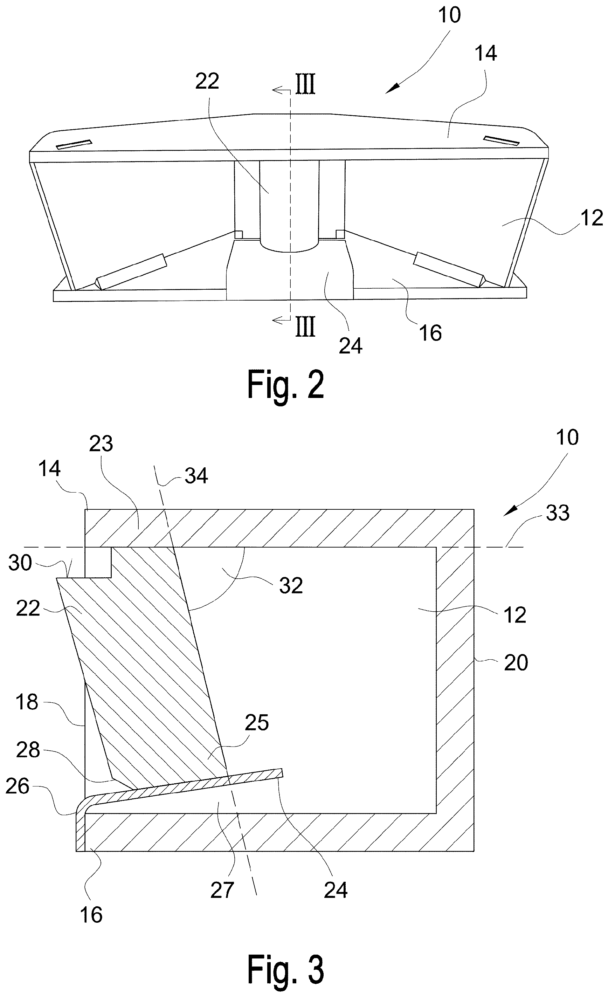

Nachfolgend wird Bezug genommen auf die Figuren 2 und 3, welche das Kupplungselement 10 im Detail zeigen. Das Kupplungselement 10 weist ein Kupplungsmaul 12 auf mit einer offenen Vorderseite 18 und einer geschlossenen Rückseite 20. Weiterhin weist das Kupplungsmaul 12 eine Oberseite 14 sowie eine Unterseite 16 auf. Dabei kann die Deichsel eines nachfolgenden fahrbaren Behälters durch die offene Vorderseite 18 in das Kupplungsmaul 12 eingeschoben werden. Die Rückseite 20 weist hierbei eine Trichterform auf, sodass die Deichsel in dem Kupplungsmaul 12 in Richtung der Mitte bewegt wird. Hierdurch ist eine vereinfachte Verbindung der Deichsel mit dem Kupplungselement 10 möglich.

Weiterhin weist das Kupplungselement 10 einen Dorn 22 auf mit einem ersten Ende 23, welches mit der Oberseite 14 des Kupplungsmauls 12 verbunden ist, und einem zweiten Ende 25. Hierbei erstreckt sich der Dorn 22 ausgehend von der Oberseite 14 in Richtung der Unterseite 16 des Kupplungsmauls 12. Zwischen dem zweiten Ende 25 des Dorns 22 und der Unterseite 16 ist eine Spalt 27 ausgebildet. Durch diesen Spalt 27 kann das zweite Ende 116 der Deichsel 110 eines nachfolgenden fahrbaren Behälters und insbesondere die Deichselöffnung 118 in das Kupplungsmaul 12 eingeschoben werden. Die Deichselöffnung 118 kann hierbei den Dorn 22 aufnehmen, sodass Zug- und Bremskräfte von dem Kupplungselement 10 auf den nachfolgenden fahrbaren Behälter übertragen werden können.

Erfindungsgemäß ist zwischen dem zweiten Ende 25 des Dorns 22 und der Unterseite 16 des Kupplungsmauls 12 ein Federblech 24 angeordnet. Das Federblech 24 ist in Richtung des zweiten Endes 25 des Dorns 22 vorgespannt. Das Federblech 24 ist dabei von einer ersten Position entgegen der Federkraft des Federblechs 24 in eine zweite Position bewegbar. Fig. 3 zeigt hierbei die erste Position, bei der das Federblech 24 am zweiten Ende 25 des Dorns 22 anliegt. In der zweiten Position ist das Federblech 24 in Richtung der Unterseite 16 des Kupplungsmauls 12 verschwenkt und gibt den Spalt 27 frei, sodass die Deichsel in das Kupplungsmaul 12 eingeführt werden kann und mit dem Dorn 22 verbunden werden kann. Das Federblech 24 verhindert somit eine ungewollte Trennung der Deichsel 110 von dem Dorn 22. Hierbei kann eine Vorderkante 26 des Federblechs 24 mit einer Vorderkante des Kupplungsmauls 12 verbunden sein beispielsweise durch Schweißen. Somit weist das Kupplungselement 10 als bewegliche Teile lediglich das Federblech 24 auf, welches verschleißsicher ist und somit eine Langlebigkeit des Kupplungselements 10 gewährleistet.

Wie gezeigt in der Fig. 3 erstreckt sich der Dorn 22 in Richtung der Rückseite 20 des Kupplungsmauls 12. Insbesondere umschließt die Rückseite 34 des Dorns 22 einen Winkel 32 mit einer Horizontalen 33. Insbesondere beträgt der Winkel 32 weniger als 90° und vorzugsweise zwischen 60° und 80°. Hierdurch wird sichergestellt, dass bei Übertragen einer Zugkraft von dem Kupplungselement 10 auf die Deichsel des nachfolgenden fahrbaren Behälters, die Deichsel in Richtung des ersten Endes 23 des Dorns 22 bewegt wird und somit weiter beabstandet ist vom dem Spalt 27. Eine ungewollte Trennung der Deichsel 110 von dem Kupplungselement 10 bei Übertragung einer Bremskraft wird somit gerade vermieden.

Weiterhin weist der Dorn 22 an seinem ersten Ende 23 eine Auflagefläche 30 auf. Die Auflagefläche 30 weist dabei in Richtung der Oberseite 14 des Kupplungsmauls 12 und ist in Richtung der Vorderseite 18 angeordnet. Wird somit eine Bremskraft von dem Kupplungselement 10 auf die Deichsel des nachfolgenden fahrbaren Behälters übertragen, schiebt sich die Deichsel auf die Auflagefläche 30 auf, wodurch ein Herabfallen der Deichsel auf bzw. in Richtung des Federblechs 24 gerade verhindert wird.

Weiterhin weist der Dorn 22 an seinem zweiten Ende 25 eine Abschrägung 28 auf, wobei die Abschrägung 28 in Richtung der Vorderseite 18 weist. Durch die Abschrägung 28 kann auf einfache Weise die Deichsel eines nachfolgenden fahrbaren Behälters in den Spalt 27 eingeführt werden, wobei gleichzeitig durch die Bewegung der Deichsel in Richtung der Rückseite 20 des Kupplungsmauls 12 das Federblech 24 in seine zweite Position gedrückt wird, wodurch der Spalt 27 freigegeben wird und die Deichselöffnung vom Dorn 22 aufgenommen werden kann.

Somit ist ein Kupplungselement und eine Kupplung bereitgestellt, welche mit einfachen mechanischen Mitteln eine sichere Verbindung von fahrbaren Behältern gewährleistet. Insbesondere ist das Kupplungselement verschleißsicher, wodurch eine Langlebigkeit gewährleistet ist und eine Ausfallwahrscheinlichkeit des fahrbaren Behälters auf Grund eines defekten Kupplungselements minimiert wird.

### Bezugszeichenliste:

- 10: Kupplungselement
- 12: Kupplungsmaul
- 14: Oberseite
- 16: Unterseite
- 18: Vorderseite
- 18: offene Vorderseite
- 20: geschlossenen Rückseite
- 20: Rückseite
- 22: Dorn
- 23: erstes Ende
- 24: Federblech
- 25: zweites Ende
- 26: Vorderkante
- 27: Spalt
- 28: Abschrägung
- 30: Auflagefläche
- 32: Winkel
- 33: Horizontale
- 34: Rückseite
- 100: fahrbarer Behälter
- 102: Ladebereich
- 106: Vorderseite
- 110: Deichsel
- 108: Rückseite
- 112: erstes Ende
- 114: Drehverbindung
- 116: zweites Ende
- 118: Deichselöffnung
- 120: Pfeil

## Patentansprüche

1. Kupplungselement für einen fahrbaren Behälter zur Verbindung mit einer Deichsel mit
einem Kupplungsmaul, wobei das Kupplungsmaul eine offene Vorderseite aufweist und eine der Vorderseite gegenüberliegende geschlossene Rückseite,
einem in dem Kupplungsmaul angeordneten Dorn zur Aufnahme in einer Deichselöffnung der Deichsel, wobei der Dorn ein erstes Ende und ein gegenüberliegendes zweites Ende aufweist, wobei das erste Ende des Dorns mit einer Oberseite des Kupplungsmauls verbunden ist und sich ausgehend von der Oberseite erstreckt in Richtung einer der Oberseite gegenüberliegenden Unterseite des Kupplungsmauls,
wobei zwischen dem zweiten Ende des Dorns und der Unterseite des Kupplungsmauls ein Spalt ausgebildet ist, so dass die Deichsel durch den Spalt in das Kupplungselement eingeschoben werden kann,
wobei ein Federblech angeordnet ist zwischen der Unterseite des Kupplungsmauls und dem zweiten Ende des Dorns.

2. Kupplungselement nach Anspruch 1, **dadurch gekennzeichnet, dass** das Federblech in Richtung des zweiten Endes des Dorns vorgespannt ist.

3. Kupplungselement nach Anspruch 1 oder 2, **dadurch gekennzeichnet, dass** das Federblech von einer ersten Position entgegen der Federkraft des Federblechs in eine zweite Position bewegbar ist, wobei in der ersten Position das Federblech am zweiten Ende des Dorns anliegt und in der zweiten Position das Federblech den Spalt freigibt.

4. Kupplungselement nach einem der Ansprüche 1 bis 3, **dadurch gekennzeichnet, dass** das Federblech eine Federkraft aufweist, die größer ist als die wirkende Gewichtskraft der Deichsel, so dass das Federblech nicht in die zweite Position bewegt wird, wenn die Deichsel auf dem Federblech aufliegt.

5. Kupplungselement nach einem der Ansprüche 1 bis 4, **dadurch gekennzeichnet, dass** das Federblech mit einer Vorderkante der Unterseite verbunden ist und insbesondere verschweißt ist.

6. Kupplungselement nach einem der Ansprüche 1 bis 5, **dadurch gekennzeichnet, dass** das Federblech aus Federstahl besteht.

7. Kupplungselement nach einem der Ansprüche 1 bis 6, **dadurch gekennzeichnet, dass** das Federblech eine Dicke aufweist von zwischen 0,3mm bis 3mm und bevorzugt zwischen 0,6mm und 1,5mm.

8. Kupplungselement nach einem der Ansprüche 1 bis 7, **dadurch gekennzeichnet, dass** der Dorn sich in Richtung der Rückseite erstreckt.

9. Kupplungselement nach einem der Ansprüche 1 bis 8, **dadurch gekennzeichnet, dass** der Dorn zu einer Horizontalen einen Winkel von <90° aufweist und insbesondere einen Winkel zwischen 60° und 80° aufweist.

10. Kupplungselement nach einem der Ansprüche 1 bis 9, **dadurch gekennzeichnet, dass** der Dorn zumindest abschnittsweise einen Querschnitt aufweist, der der Deichselöffnung entspricht.

11. Kupplungselement nach einem der Ansprüche 1 bis 10, **dadurch gekennzeichnet, dass** der Dorn an seinem ersten Ende eine Auflagefläche aufweist, wobei die Auflagefläche in Richtung der Oberseite weist und in Richtung der Vorderseite angeordnet ist.

12. Kupplungselement nach einem der Ansprüche 1 bis 11, **dadurch gekennzeichnet, dass** der Dorn an seinem zweiten Ende eine in Richtung der Vorderseite weisende Abschrägung aufweist.

13. Kupplungselement nach einem der Ansprüche 1 bis 12, **dadurch gekennzeichnet, dass** eine Breite des Spalts im Wesentlichen der Dicke der Deichsel entspricht.

14. Kupplung mit einem Kupplungselement nach einem der Ansprüche 1 bis 13 und einer Deichsel, wobei die Deichsel eine Deichselöffnung aufweist, wobei zum Verbinden der Deichsel mit dem Kupplungselement der Dorn des Kupplungselements in der Deichselöffnung aufnehmbar ist.

15. Fahrbarer Behälter mit einer Deichsel an einer ersten Seite und einem Kupplungselement nach einem der Ansprüche 1 bis 13 an einer gegenüberliegenden zweiten Seite, so dass der fahrbare Behälter mit der Deichsel mit einem vorhergehenden fahrbaren Behälter verbunden werden kann und/oder die Deichsel eines nachfolgenden fahrbaren Behälters mit dem Kupplungselement verbindbar ist.
